# EUROPEAN PATENT SPECIFICATION

(11) **EP 1 353 562 B1**
(45) Date of publication and mention of the grant of the patent: **02.08.2006**
(21) Application number: 02715380.8
(22) Date of filing: 18.01.2002
(51) Int. Cl.: A23B 4/30, A23L 3/34

(54) **A METHOD AND AN APPARATUS FOR INHIBITING OF PATHOGENS WHEN PRODUCING SLICED FOOD**
VERFAHREN UND VORRICHTUNG ZUR BLOCKIERUNG VON KRANKHEITSERREGERN BEI DER HERSTELLUNG VON IN SCHEIBEN GESCHNITTENEN LEBENSMITTELN
PROCEDE ET APPAREIL D'INHIBITION DE GERMES PATHOGENES LORS DE LA PRODUCTION D'ALIMENTS EN TRANCHES

(30) Priority: 18.01.2001 DK 200100094
(43) Date of publication of application: 22.10.2003
(73) Proprietor: CHR. HANSEN A/S, 2970 Hoersholm (DK)
(72) Inventor: GRANLY KOCH, Anette, DK-2740 Skovlunde (DK); LAMMERT, Lotte, DK-3630 Jaegerspris (DK); JACOBSEN, Tomas, DK-4000 Roskilde (DK)
(74) Representative: Markvardsen, Peter
(86) International application number: PCT/DK2002/000039
(87) International publication number: WO 2002/056694

(56) References cited:
- EP-A1- 0 204 395
- DK-B1- 173 217
- US-A- 6 063 425

## Description

The present invention relates to a method and an apparatus for production of sliced food.

During the last couple of years there has been an increased attention to the occurrence of pathogenic germ cells in food. The food industry has applied new procedures in order to avoid food becoming carriers of pathogenic germ cells. However, a special problem is food that has been sterilized using heat treatment and then sliced and packed in individual packages. Pathogenic bacteria adhering to sterile goods are not exposed to competition from natural, non-pathogenic bacteria. To avoid the pathogenic bacteria the industry applies a combination of different methods that "exhaust" the pathogenic bacteria thus denying them of the possibility of growing. A high level of hygiene and process control in all stages is a requirement for the methods to work.

It is know that certain organisms, either by themselves or by creating matter, are capable of selectively inhibiting pathogenic bacteria on the surface of sliced food. Such biopreserving bacteria may therefore be a part of companies' programmes to hamper growth of pathogenic bacteria on sliced food. However, no application system exists today that can add sufficient amounts of such bacteria to the slices and spread them onto the surfaces of the slices in order to avoid growth of pathogenic germ cells on all surface parts.

DK-A-173217 discloses the treatment of sliced meat products with a preservative composition.

The purpose of the present invention is to provide a method for production of sliced food, characterised in that sufficient amounts of a preparation inhibiting the development of pathogenic germ cells are automatically added onto the surface of the slices, which sufficient amount results in a product that is safe to use after having been stored for a considerable amount of time at fiidge temperature.

The present invention is based on the observation that the preparation inhibiting pathogens is efficiently being sprayed onto the surfaces of the slices, when the preparation is being added during the slicing onto the cut off slices of the piece of food, which cut off slices occur during the slicing of the food.

The method according to the present invention is thus characterised in that during slicing a preparation inhibiting pathogens is being sprayed onto the cut off slice surfaces of the piece of food, which cut off slice surfaces are provided during slicing.

The invention uses the fact that the cut off slice surfaces that are exposed during slicing, have a well defined position and therefore are effectively hit by drops, jets or similar of the preparation inhibiting pathogens, which are produced by an arrangement which is mounted in front of the cut off slice surfaces of the piece of food. When a slice falls down on the previously cut slice, it may also be of importance for the effectiveness of the application that the cut off slice surface, after the preparation inhibiting pathogens has been added and the slice has been cut, will touch the back of the preceding slice, where part of the preparation will be deposited.

Preferably, the preparation inhibiting pathogens is being added using one or more nozzles, which are directed towards an exposed cut off slice surface of the food. The nozzles are capable of depositing the preparation onto the exposed cut off slice surfaces as well as onto the sides of the slices before cutting, and partly on the back of the slices after cutting. The preparation will also hit the working knife, which has the advantageous side effect that they can transfer the preparation to the cuts via the knife. The nozzles are preferably spray nozzles, which e.g. produce droplets of the preparation inhibiting pathogens.

The preparation inhibiting pathogens may comprise bacteria which directly or indirectly via a manufactured bacteriocin are effective against pathogenic germ cells, e.g. listeria organisms.

The preparation inhibiting pathogens is being added in such an amount that the development of germ cells on the slices is inhibited for at least 4 weeks, when the slices are stored in inert-gas or vacuum packages at 5-10 °C. In this way the sliced food is secured against the development of pathogenic germ cells during its entire shelf-life.

The preparation inhibiting pathogens is preferably being added using two nozzles, of which one is placed right opposite the cut off slice surface, facing the surface, and the other is placed to the side of the cut off slice surface, facing the side of the piece of food and the cut off slice surface of the piece of food. This has proven to give a particularly effective result of the preparation.

The preparation inhibiting pathogens is preferably being added in an amount of less than 0.1 ml per cm2 cut off slice surface, so that visibly wet slices are avoided.

The slices are stacked or lap jointed during slicing, whereby the effect of the preparation inhibiting pathogens is reinforced by the above mentioned depositing of the preparation to the back of the preceding slice.

The slices may be packed stacked or lap jointed for the effect of the treatment to stay effective for a long time.

In a preferred embodiment of the method, the preparation inhibiting pathogens is being added onto all surfaces of the piece of food before slicing, whereby a particularly effective protection of the sliced piece of food against development of pathogenic germ cells during storage is achieved.

The method according to the present invention may be used on all kinds of food that risk becoming contaminated with pathogenic germ cells or other harmful bacteria. In particular, the piece of food may be food that has been boiled, heated or otherwise treated.

The preparation inhibiting pathogens is being added in an efficient amount, which does not necessarily has to be very big. E.g. listeria organisms are inhibited already when adding 10⁴ cfu/g of a sample of an organism. To avoid development of listeria, preferably at least 10⁴ cfu/g of a sample of an organism effective against listeria is being added.

The apparatus for producing sliced food is of the kind, which comprises a slicer with one or more knives for cutting the piece of food into slices by repetitive cuttings of the piece of food, characterised in that the machine comprises devices for adding a preparation inhibiting pathogens onto the cut off slice surfaces that occur during the slicing of the piece of the sample.

By a preparation inhibiting pathogens is to be understood a preparation inhibiting the development of pathogenic germ cells.

In the present, food is to be understood as e.g. meat products, such as different kinds of saveloy, smoked-cured fillet, cooked or smoked-cured ham, salt beef, cured saddle of pork or sausages made of rolled meat.

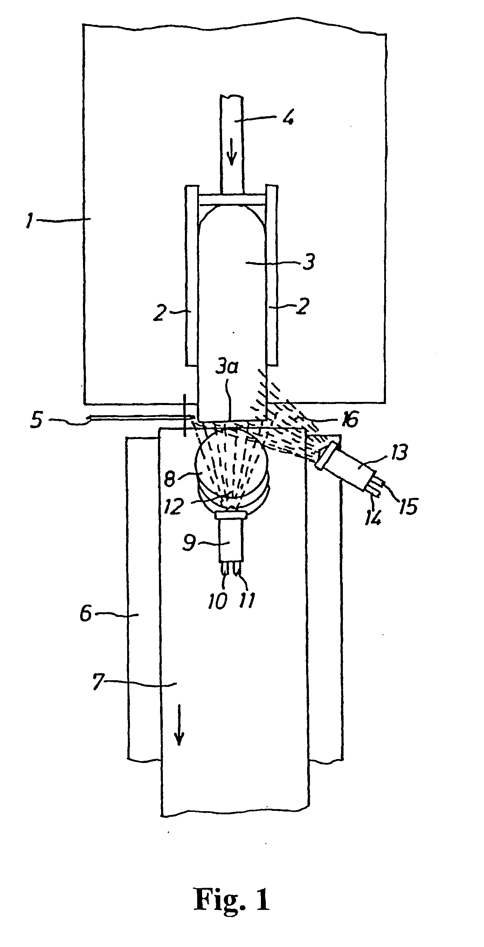

The invention will be described in detail in the following and with reference to the accompanying drawing that shows a schematic diagram of a slicer with a mounted spray nozzle with a solution inhibiting pathogens.

The slicer (1) is of traditional construction and of the make Dixie Union, Germany type SL 482. It comprises a guide (2) for the piece of sample (3) to be sliced (e.g. saucisson), and a means (4) for successively leading the piece of sample to an eccentrically mounted circular knife (5). At the end of the slicer a conveyor (6) is placed with a conveyor belt (7), which catches the slices (8), which are cut off by the knife. The belt (7) runs during the slicing, which means that the slices will lay lap jointed on the belt. The speed of the belt may in short jerks be increased considerably, so that every 10 or 20 slices are not lap jointed with the preceding slice. In this way the slices are found in series of 10 or 20 on the belt.

Above the belt (7) and right opposite the cut off slice surface (3a) of the piece of sample to be sliced is a spray nozzle (9), which through two tubes (10,12) is being supplied with a solution inhibiting pathogens and compressed air from a mist disinfection device of the make CleanTech A/S Danmark, type Desinfector 200. Running, the nozzle produces a cone shaped mist (12) of the solution inhibiting pathogens. The droplets of the mist hit the cut off slice surface of the piece of food, i.e. the end face (3a), and adhere to the surface of the end face and other surface parts, such as the back of the slices and the knife's blade. The droplets are of such a size that they essentially do not spread into the room (as opposed to the drops from the normal nozzles of a mist disinfection device, where the mist must spread into the room).

Likewise mounted above the level of the belt (7), but to the side of the end face (3 a) of the piece of sample, is another spray nozzle (13), which is of the same construction as the nozzle (9) and is being supplied with the solution and the compressed air from the same mist disinfection device via tubes (14,15). When the nozzle (13) is running, it produces a corresponding mist (16) of the preparation inhibiting pathogens as the nozzle (9), but the droplets of the mist hits other surface parts, such as the side of the piece of sample at the cut off slice surface (3a) and the back of the slices.

The apparatus is used in the following examples to examine the effect of adding a preparation inhibiting pathogens during slicing of a meat product.

### Example 1

This example describes production and slicing of saucisson with an added biopreserving solution, and it shows the effect of the added solution on the long term storage life of the meat slices after they are packed in an inert-gas package.

### Production of saucisson

Of the following ingredients 14 kg of saucissons are made:

| Ingredient | % | kg |
|---|---|---|
| Shoulder 15% fat | 51.93 | 7.27 |
| Jowl butt, 40% fat | 18.03 | 2.52 |
| Water | 21.20 | 2.97 |
| Potato flour | 3.73 | 0.52 |
| Soy isolate | 1.40 | 0.19 |
| Caseinate(EM-HV) | 1.40 | 0.19 |
| Phosphate N15-15 | 0.31 | 0.04 |
| Vacuum salt | 2.00 | 0.28 |
| Nitrite | 60 ppm | 0.8 g |
| Total | 100.00 | 14.00 |

Shoulders, jowl butt and half of the water, nitrite, vacuum salt and phosphate are mixed in a bowl chopper, running 10 rounds with a knife speed of 3000 rpm. After the material is scraped down, addition of the soy isolate, the caseinate, the potato flour and the rest of the water is performed, and the chopper is first running 5 rounds at a knife speed of 2000 rpm, and then 25 rounds at a speed of 4000 rpm.

Under vacuum, the chopped meat is filled into sterile artificial guts (diameter 50 mm), which are clipped into sausages. The sausages are heat treated in a boil hood at 80°C for an hour and are then showered with 10°C cold water. After the heat treatment, the sausages are removed by an operator wearing sterile bags turned inside out on his hands, and the sausages are placed in bags in boxes that are cleaned in spirit and placed in a cold store at a temperature of 2°C until they are going to be cut.

### Contamination with listeria

To simulate a contamination with listeria, which occurs in connection with skinning and slicing of the sausages, the sausages are inoculated artificially with a cocktail of five listeria strains. The following strains are used:
DMRI 4127-PX: *L. monocytogenes* A, 9 (Ti, serotype 4)
DMRI 4128-PX: *L. monocytogenes* C, 5 (770, serotype 1)
DMRI 4124-PX: *L. monocytogenes* A, 2 (3894, serotype 1)
DMRI 4125-PX: *L. monocytogenes* A, 5 (3971, 2, serotype 1)
DMRI 4140-PX: *L. monocytogenes* A, 9 (Hurdler H52/KVL 412)

The strains are activated separately in a BHI broth, and the purity is controlled on BHI-A. From BHI-A, each of the cultures is grown in BHI-B, to which 1.5% NaCl is added (total NaCl-content: 2%) at 5°C for 13 days. The cultures are mixed in equal amounts, and a working solution is produced by diluting with a physiologic NaCl solution to a bacterial count of 2 x 10² cfu/ml.

The solution is spread onto the entire surface of the sausages to a bacterial count of 10 cfu/cm² and the sausages are left to dry for an hour in the production room This way, the listeria bacteria will have time to adhere to the surface of the meat.

### Slicing and biopreservation

The contaminated sausages are cut into 2 mm slices in the above mentioned apparatus. The following settings of the slicer were applied:

| | |
|---|---|
| Belt: | 017 |
| Weight: . | 251 |
| Displacement | 59 |
| Step: | 243 |
| Slices: | 10 |

A solution of a culture produced by diluting 10 g freeze dried *L. carnosum* 1043 in a litre of physiological NaCl solution (bacterial count: 3 x 10⁸ cfu/ml) is being added during the slicing using the nozzles 9 and 13. The nozzles use a solution pressure of 1 bar and an air pressure of 1 bar, resulting in an inoculation level on each slice of ca. 10⁷ cfu/g sample.

### Packaging

The biopreserved saucisson slices are packed lap jointed in trays of polystyrene with ca. 100 g in each tray. The tray and slices are wrapped in an oxygen tight folio bag in a 20/80 atmosphere of CO₂ and N₂. The packages are stored in a cool place at 5 or 10°C.

As a control, packages without the biopreserving solution are produced.

### Microbiological examination

After 3 or 4 weeks or storage at 5 or 10°C, samples are taken from the trays for a microbiological examination. The entire content of the tray is mixed with physiologic NaCl solution with pepton in a ratio of 1:9 and treated in a stomacher for 1 minute.

To determine the bacterial count for listeria, samples are spread directly onto an Oxford agar and incubated for 1-2 days at 37°C. In the case of samples with a low listeria bacterial count, a 3 x 3 tube MPN analysis is carried out in Fraser Broth instead. The result of the analysis is shown in the following table.

**The occurrence (log cfu/g) of *L. monocytogenes* in saucissons, to which *L. carnosum* 1043 in a level of 10**^{**7**} **cfu/g is being added during slicing and which saucissons have been stored at 5 or 10°C**

| **5°C** | **day 1** | **day 21** | **day 28** | **10°C** | **day 1** | **day 21** | **day 28** |
|---|---|---|---|---|---|---|---|
| | n=2 | n=6 | n=6 | | n=2 | n=6 | n=6 |
| average | 0.5 | 1.5 | 1.5 | | 0.8 | 3.1 | 3.5 |
| control | 1.0 | 3.3 | 4.6 | | 0.8 | 7.7 | 7.4 |

It is shown that after 3 and 4 weeks of storage at 5°C there is a very low growth of *L. monocytogenes* in the packages with biopreserved saucisson, as opposed to the control packages , where *L. moncytogenes* is capable of growing to a level of ca. 10⁵ cfu/g after 4 weeks. At 10°C the growth inhibiting effect of the biopreservation is less distinct, as *L. monocytogenes* grows to an average level of 3.5 after 4 weeks. The level is 4 log units higher in the control.

The anti-sterile effect of *L. carnosum* is thus considerable both at 5 and 10°C, when the culture is being added using the two nozzles during slicing in a level of 10⁷ cfu/g.

### Example 2

The purpose of this example is to examine whether adding a biopreserving culture onto the surface of a skinned sausage before the slicing with the same added culture on the slices, gives any additional results.

The experiment is carried out in the same way as in Example 1, but a solution of *L. carnosum* 1043 (10⁹ cfu/ml) is added onto the entire surface of the saucisson. The solution is added manually using a nozzle of the same construction as in the fixed nozzles.

Microbiologic analyses are carried out as in example 1. The results are shown in the following table.

**Occurrence (log cfu/g) of *L. monocytogenes* in saucissons, onto the surface of which *L. carnosum* 1043 is being added, and which saucissons have been sliced while the same culture is simultaneously being added onto the slices in a level of 10**^{**7**} **cfu/g and then stored at 5 or 10°C**

| **5 °C** | **day 1** | **day 21** | **day 28** | **10°C** | **day 1** | **day 21** | **day 28** |
|---|---|---|---|---|---|---|---|
| | n=2 | n=6 | n=6 | | n=2 | n=6 | n=6 |
| average | 0.5 | 0.1 | -0.4 | | 0.5 | -0.2 | -0.5 |
| control | 1.0 | 3.3 | 4.6 | | 0.8 | 7.7 | 7.4 |

It is shown that no growth of *L. monocytogenes* is found in the biopreserved product after 4 weeks of storage, neither at 5°C nor at 10°C. It is also a clear improvement to add the culture onto the surface of the skinned sausage before slicing with the biopreserving solution. The effect is particularly clear at 10°C, where the improvement is 4 log units seen in relation to the effect that is achieved in example 1 after 4 weeks.

A very certain inhibition of growth of *L. monocytogenes* is thus achieved for up to 4 weeks of storage at 5 or 10°C, when the biopreserving culture is added onto the surface of the saucisson before slicing and then additionally added using two nozzles in connection with the slicing. In the biopreserved products, *L. monocytogenes* will not grow to levels above what is allowed.

### Example 3

The purpose of this example is to examine, whether a low inoculation level of *L. carnosum* 1043 may be used, as this will mean considerable savings when purchasing cultures.

The experiment is carried out in the same way as in Example 2 with adding of biopreserving culture both before and during slicing. During slicing the culture is added only in a level of 10⁴ cfu/g sample.

Microbiological analyses are carried out as in example 1. The results are shown in the following table.

**Occurrence (log cfu/g) of *L. monocytogenes* in saucissons, onto the surface of which *L. carnosum* 1043 is being added, and which saucissons have been sliced while the same culture simultaneously is being added onto the slices in a level of 10**^{**4**} **cfu/g and then stored at 5 or 10°C**

| **5 °C** | **day 1** | **day 21** | **day 28** | **10°C** | **day 1** | **day 21** | **day 28** |
|---|---|---|---|---|---|---|---|
| | n=2 | n=6 | n=6 | | n=2 | n=6 | n=6 |
| average | 0.8 | 0.1 | 2.1 | | 1.0 | 1.3 | 1.4 |
| control | 0.8 | 4.2 | 5.5 | | 0.8 | 7.6 | 7.8 |

It is shown that the same antisterile effect is not achieved, if the level of inoculation of *L. carnosum* 1043 is changed from 10⁷ cfu/g to 10⁴ cfu/g. A small growth of *L. monocytogenes* is observed after 3 and 4 weeks of storage at 5 and 10°C, respectively. The level of *L. monocytogenes* is 2 log units higher than when the solution was added in a level of 10⁷ cfu/g (example 2). However, there is still a very significant effect of the treatment, as the biopreserved products have a level of 4-6 log units lower than that of the control. Even in low level, the added solution inhibiting pathogens is effective against listeria in sliced products that are stored for 4 week at 5-10 °C.

## Claims

1. A method for production of sliced pieces of food, in which a piece of food (3) is cut into slices (8) in a slicer (1) by repetitive cuttings of the piece of food, **characterized in that** a preparation inhibiting pathogens (12,16) is being sprayed onto the cut off slice surfaces (3 a) that occur during the slicing of the piece of food.

2. A method according to claim 1, **characterized in that** the preparation (12, 16) is being sprayed using one or more nozzles (9,13).

3. A method according to claim 1, **characterized in that** the preparation (12,16) comprises bacteria that directly or via a manufactured bacteriocin are effective against pathogenic germ cells.

4. A method according to claim 1, **characterized in that** the preparation (12,16) is being sprayed in such an amount that the development of germs on the slices (8) are inhibited for at least 4 weeks, when the slices are stored in inert-gas or vacuum packages at 5-10 °C.

5. A method according to claim 1, **characterized in that** the preparation (12,16) is being sprayed using two nozzles (9,13), of which one (9) is placed right opposite the cut off slice surface (3a) of the piece of food, facing the surface, and the other (13) is placed to the side of the cut off slice surface (3a), facing the side of the piece of food and the cut off slice surface of the piece of food.

6. A method according to claim 1, **characterized in that** the preparation (12,16) is being sprayed in an amount of less than 0,1 ml per cm² cut off slice surface (3a).

7. A method according to claim 1, **characterized in that** the slices (8) are stacked or lap jointed during slicing.

8. A method according to claim 1, **characterized in that** the slices (8) are packed stacked or lap jointed in an inert-gas or vacuum package.

9. A method accoidimg to claim 1, **characterized in that** the preparation inhibiting pathogens (12,16) is being sprayed onto all surfaces of the piece of food (3) before slicing.

10. A method according to claim 1, **characterized in that** the piece of food (3) is food that has been boiled, heated or otherwise treated.

11. A method according to claim 1, **characterized in that** at least 10⁴ cfu/g of a sample of an organism effective against listeria, is being sprayed.

12. Apparatus for producing sliced pieces of food, comprising a slicer (1) with one or more knives (5) for cutting the piece of food (3) into slices (8) by repetitive cuttings of the piece of food, **characterized in that** the slicer (1) comprises devices (9,13) for spraying a preparation inhibiting pathogens (12,16) onto the cut off slice surfaces (3a) that occur during the slicing of the piece of food.

## Patentansprüche

1. Verfahren zur Herstellung von in Scheiben geschnittenen Lebensmitteln, bei denen ein Lebensmittel (3) (8) in einer Schneidemaschine (1) durch wiederholte Schnitte des Lebensmittels in Scheiben geschnitten wird, **gekennzeichnet dadurch, dass** ein Krankheitserreger blockierendes Präparat (12, 16) auf die abgeschnittenen Scheibenoberflächen (3a) gesprüht wird, die beim Zerschneiden des Lebensmittels anfallen.

2. Verfahren nach Anspruch 1, **gekennzeichnet dadurch, dass** das Präparat (12, 16) unter Verwendung einer oder mehrerer Düsen (9, 13) gesprüht wird.

3. Verfahren nach Anspruch 1, **gekennzeichnet dadurch, dass** das Präparat (12, 16) Bakterien umfasst, die direkt oder durch ein hergestelltes Bakteriozin wirksam gegen Krankheitserregerzellen sind.

4. Verfahren nach Anspruch 1, **gekennzeichnet dadurch, dass** das Präparat (12, 16) in einer solchen Menge gesprüht wird, dass die Entwicklung von Keimen auf den Scheiben (8) mindestens 4 Wochen lang gehemmt wird, wenn die Scheiben in Inertgas oder Vakuumpackungen bei 5-10 °C gelagert werden.

5. Verfahren nach Anspruch 1, **gekennzeichnet dadurch, dass** das Präparat (12, 16) unter Verwendung von zwei Düsen (9, 13) gesprüht wird, von denen eine (9) mit der Frontseite genau gegenüber der abgeschnittenen Scheibenoberfläche (3a) des Lebensmittels montiert ist, und die andere (13) auf der Seite der abgeschnittenen Scheibenoberfläche (3a), gegenüber der Seite des Lebensmittels und der abgeschnittenen Scheibenoberfläche des Lebensmittels montiert ist.

6. Verfahren nach Anspruch 1, **gekennzeichnet dadurch, dass** das Präparat (12, 16) in einer Menge von weniger als 0,1 ml pro cm² abgeschnittene Scheibenoberfläche (3a) gesprüht wird.

7. Verfahren nach Anspruch 1, **gekennzeichnet dadurch, dass** die Scheiben (8) während des Zerschneidens geschichtet oder durch Überlappung verbunden werden.

8. Verfahren nach Anspruch 1, **gekennzeichnet dadurch, dass** die Scheiben (8) in einem Inertgas oder einer Vakuumpackung geschichtet, verpackt oder durch Überlappung verbunden werden.

9. Verfahren nach Anspruch 1, **gekennzeichnet dadurch, dass** das Krankheitserreger blockierende Präparat (12, 16) vor dem Zerschneiden auf alle Oberflächen des Lebensmittels (3) gesprüht wird.

10. Verfahren nach Anspruch 1, **gekennzeichnet dadurch, dass** das Lebensmittel (3) gekocht, erhitzt oder sonstwie behandelt wurde.

11. Verfahren nach Anspruch 1, **gekennzeichnet dadurch, dass** mindestens 10⁴ cfu/g einer Probe eines gegen Listeria wirksamen Organismus gesprüht wird.

12. Vorrichtung zur Herstellung in Scheiben geschnittener Lebensmittel, mit einer Schneidemaschine (1) mit einem oder mehreren Messern (5) zum Schneiden des Lebensmittels (3) in Scheiben (8) durch wiederholte Schnitte des Lebensmittels, **gekennzeichnet dadurch, dass** die Schneidemaschine (1) Vorrichtungen (9, 13) umfasst, um ein Krankheitserreger blockierendes Präparat (12, 16) auf die abgeschnittenen Scheibenoberflächen (3a) zu sprühen, die beim Zerschneiden des Lebensmittels gebildet werden.

## Revendications

1. Procédé pour la production de morceaux d'aliments en tranches, dans lequel un morceau d'aliment (3) est coupé en tranches (8) dans une machine à trancher (1) par des coupures répétitives du morceau d'aliment, **caractérisé en ce qu'**une préparation inhibant les pathogènes (12, 16) est vaporisée sur les surfaces des tranches coupées (3a) pendant la coupe du morceau d'aliment.

2. Procédé selon la revendication 1, **caractérisé en ce que** la préparation (12, 16) est vaporisée en utilisant un ou plusieurs gicleurs (9, 13).

3. Procédé selon la revendication 1, **caractérisé en ce que** la préparation (12, 16) comprend des bactéries qui, directement ou par la fabrication de bactériocine, sont efficaces contre les cellules de germes pathogènes.

4. Procédé selon la revendication 1, **caractérisé en ce que** la préparation (12, 16) est vaporisée dans une quantité telle que le développement des germes sur les tranches (8) est inhibé pendant au moins 4 semaines, quand les tranches sont stockées dans un emballage sous gaz inerte ou dans un emballage sous vide à 5-10 °C.

5. Procédé selon la revendication 1, **caractérisé en ce que** la préparation (12, 16) est vaporisée en utilisant deux gicleurs (9, 13), dont l'un (9) est placé exactement en face de la surface de la tranche coupée (3a) du morceau d'aliment, vis-a-vis de la surface, et l'autre (13) est placé du côté de la surface de la tranche coupée (3a), vis-a-vis du côté du morceau d'aliment et de la surface de la tranche coupée du morceau d'aliment.

6. Procédé selon la revendication 1, **caractérisé en ce que** la préparation (12, 16) est vaporisée dans une quantité égale à moins de 0.1 ml par cm² de surface de la tranche coupée (3a).

7. Procédé selon la revendication 1, **caractérisé en ce que** les tranches (8) sont empilées ou assemblées pendant la coupe.

8. Procédé selon la revendication 1, **caractérisé en ce que** les tranches (8) sont emballées, empilées ou assemblées dans un emballage sous gaz inerte ou dans un emballage sous vide.

9. Procédé selon la revendication 1, **caractérisé en ce que** la préparation inhibant les pathogènes (12, 16) est vaporisée sur toutes les surfaces du morceau d'aliment (3) avant la coupure.

10. Procédé selon la revendication 1, **caractérisé en ce que** le morceau d'aliment (3) a été cuit, chauffé ou traité autrement.

11. Procédé selon la revendication 1, **caractérisé en ce que** au moins 10⁴ cfu/g d'un échantillon d'un organisme efficace contre la listeria est vaporisé.

12. Appareil pour la production de morceaux d'aliments tranchés, comprenant une machine à trancher (1) avec un ou plusieurs couteaux (5) pour couper le morceau d'aliment (3) en tranches (8) par des coupes répétitives du morceau d'aliment, **caractérisé en ce que** la machine à trancher (1) comprend des dispositifs (9, 13) pour vaporiser une préparation inhibant les pathogènes (12, 16) sur les surfaces des tranches coupées (3a) pendant la coupe du morceau d'aliment.
